# FASCICULE DE BREVET EUROPEEN

(11) **EP 2 195 154 B1**
(45) Date de publication et mention de la délivrance du brevet: **04.05.2011**
(21) Numéro de dépôt: 08786910.3
(22) Date de dépôt: 05.08.2008
(51) Int. Cl.: B29C 65/00, B29C 70/00, B29C 69/00, B29C 65/50

(54) **PROCÉDÉ DE FABRICATION D'UNE STRUCTURE COMPLEXE EN MATÉRIAU COMPOSITE PAR ASSEMBLAGE D'ÉLÉMENTS RIGIDES**
VERFAHREN ZUR HERSTELLUNG EINER AUS EINEM VERBUNDSTOFF HERGESTELLTEN KOMPLEXEN STRUKTUR DURCH MONTAGE STARRER KOMPONENTEN
METHOD OF MANUFACTURING A COMPLEX STRUCTURE MADE OF A COMPOSITE BY ASSEMBLING RIGID COMPONENTS

(30) Priorité: 10.08.2007 FR 0705810
(43) Date de publication de la demande: 16.06.2010
(73) Titulaire: European Aeronautic Defence and Space Company EADS France, 75016 Paris (FR)
(72) Inventeur: CINQUIN, Jacques, F-91430 Igny (FR)
(74) Mandataire: Maupilier, Didier
(86) Numéro de dépôt international: PCT/EP2008/060302
(87) Numéro de publication internationale: WO 2009/021885

(56) Documents cités:
- EP-A- 1 547 753
- WO-A-02/16784
- WO-A-02/066235
- US-A1- 2003 000 641
- "Polymérisation" INTERNET CITATION, [Online] 24 janvier 2006 (2006-01-24), XP002459629 Extrait de l'Internet: URL:http://www.futura-sciences.com/fr/comp rendre/glossaire/definition/t/m atiere-1/d/polymerisation_2890/> [extrait le 2007-11-22]

## Description

La présente invention appartient au domaine de la fabrication des pièces réalisées par assemblage d'éléments essentiellement réalisés en matériau composite.

Plus particulièrement l'invention concerne la réalisation de telles pièces destinées à des structures fortement chargées et dont les dimensions de réalisation doivent être assurées avec précision.

Les matériaux composites sont aujourd'hui largement utilisés pour la fabrication de pièces dans de nombreux domaines industriels, y compris pour des pièces structurales, c'est à dire devant supporter des efforts importants lors de leur utilisation.

De nombreux matériaux composites existent, les plus répandus étant constitués de fibres plus ou moins longues de matières minérales ou organiques (verre, carbone, aramide...) contenues dans une matrice formée par une résine organique dure.

Lorsque des structures complexes doivent être réalisées en matériaux composites avec des formes qui rendent leurs réalisations difficiles en une seule pièce, par exemple pour des structures difficiles à démouler ou pour des structures de dimensions trop importantes vis à vis des moyens de production (moules, étuves, autoclaves ...) disponibles, la solution la plus généralement utilisée consiste à réaliser des pièces de formes plus simples et de dimensions plus réduites et d'assembler ces pièces pour réaliser la structure voulue.

Les méthodes d'assemblage utilisées pour ces structures en matériaux composites sont similaires à celles utilisées pour l'assemblage de structures en matériaux métalliques et consistent essentiellement en la pose de fixations, par exemple de rivets, dans des trous d'assemblage réalisés dans les pièces qui sont assemblées avec un recouvrement partiel et ou avec une ou plusieurs éclisses.

En particulier vis à vis des applications du domaine des constructions aéronautiques, ces procédés d'assemblage présentent divers inconvénients.

D'une part la présence des trous d'assemblage dans les structures fortement chargées nécessite de réaliser des renforcements locaux qui se traduisent, en particulier pour les matériaux composites qui ont de mauvaises performances en présence d'un trou, par des augmentations nécessaires des épaisseurs locales des pièces qui pénalisent la masse de l'assemblage.

D'autre part, dans la plupart des situations, il est nécessaire d'interposer entre les pièces assemblées des mastics d'étanchéité qui assurent l'étanchéité entre les pièces et l'étanchéité au niveau des fixations et qui assurent le comblement, dans certaines limites, d'espaces entre les pièces assemblées compte tenu des tolérances de fabrication des pièces.

Ce procédé de réalisation de structures, en particulier pour les structures en matériau composite, s'avère donc pénaliser la masse des structures ainsi assemblées et s'avère complexe et coûteux sur le plan du processus industriel.

Afin de simplifier les méthodes industrielles de réalisation de structures complexes en matériau composite sans pénaliser la masse de telles structures, l'invention propose un procédé d'assemblage qui utilise des éléments d'assemblage en matériau composite pour assembler des pièces élémentaires de la structure complexe.

Suivant le procédé de l'invention pour la réalisation d'une structure complexe en matériau composite comportant au moins deux pièces élémentaires structurales assemblées par au moins un bord d'une des deux pièces élémentaires, le procédé comporte les étapes de :
- a) réalisation des pièces élémentaires ;
- b) réalisation d'au moins un élément d'assemblage destiné à assurer une liaison structurale entre les pièces élémentaires, ledit au moins un élément d'assemblage :
   - b1) étant réalisé en matériau composite composé de fibres imprégnées d'une résine apte à durcir par polymérisation au cours d'une cuisson thermique ;
   - b2) comportant des ailes solidaires d'une âme et au moins une paire d'ailes déterminant au moins une gorge, destinée à recevoir le bord d'une pièce élémentaire, dont une largeur de fond de gorge au niveau de l'âme correspond sensiblement en tout point à une épaisseur de la pièce élémentaire le long du bord devant être inséré dans ladite gorge ;
   - b3) étant soumis à une cuisson thermique partielle ayant pour effet de polymériser partiellement la résine de l'élément d'assemblage d'une part jusqu'à un stade où l'élément a acquis une stabilité dimensionnelle suffisante pour assurer sa manipulation et garantir son intégrité lors des opérations ultérieures d'assemblage, et d'autre part limitée à un stade ou la résine a des propriétés thermoplastiques permettant un formage plastique de l'élément d'assemblage en élevant sa température ;
- c) positionnement relatif des pièces élémentaires et des éléments d'assemblage conformément à leurs positions relatives respectives dans la structure à réaliser ;
- d) élévation de la température, au moins localement, jusqu'à une température de formage thermoplastique des ailes et application d'une pression P sur les ailes pour appliquer les ailes sur des faces des pièces élémentaires ;
- e) réalisation d'une cuisson thermique complète de polymérisation de la résine du au moins un élément d'assemblage.

Afin de rendre aisé la mise en place des pièces élémentaires dans les gorges des éléments d'assemblage et de faciliter l'insertion des bords des pièces jusqu'aux fonds des gorges, avantageusement les ailes d'une paire d'ailes formant une gorge d'un élément d'assemblage s'écartent l'une de l'autre depuis des pieds à proximité de l'âme vers des extrémités libres des dites ailes de telle sorte que la gorge est évasée vers les extrémités libres.

Pour améliorer la qualité de l'assemblage au niveau de la jonction entre les ailes et les pièces élémentaires, de préférence un film de colle est déposé sur des surfaces des faces sur lesquelles les ailes viennent en appui.

Pour simplifier la réalisation des éléments d'assemblage et éviter des moules complexes pour cette réalisation, avantageusement, lorsqu'un élément d'assemblage doit suivre des courbes ou des vrillages limités qui peuvent être obtenus en utilisant les propriétés élastiques de l'élément d'assemblage lors de sa mise en place, l'élément d'assemblage considéré est réalisé lors de l'étape b) sans que ne soient reproduits sur cet élément d'assemblage l'ensemble les courbures et ou les vrillages en question que l'élément d'assemblage aura dans la position préassemblée ou assemblée avec les pièces élémentaires.

Afin de réaliser différentes des structures comportant diverses configurations d'assemblage des pièces élémentaires, des éléments d'assemblage ont des formes avantageusement adaptées, par exemple des paires d'ailes sensiblement alignées pour assurer l'assemblage de deux pièces élémentaires sensiblement alignées, ou des paires d'ailes formant un angle pour assembler deux pièces élémentaires formant un angle à leurs bords communs, ou trois ou plus paires d'ailes ayant des orientations différentes pour assembler au moins trois pièces élémentaires.

Dans une forme particulière répondant au besoin de fixer une pièce élémentaire par un bord sur une face d'une autre pièce élémentaire, un élément d'assemblage est réalisé de telle sorte que les ailes de la paire d'ailes fixées sur l'autre pièce élémentaire forment une surface d'appui conformée pour être appliquée sur la face de cette autre pièce.

Le procédé suivant l'invention est décrit en référence aux figures qui représentent schématiquement :
- figure 1 :: un exemple d'élément d'assemblage avant sa mise en oeuvre à l'issue d'une seconde étape du procédé ;
- figure la :: un détail d'une section de l'élément d'assemblage de la figure 1;
- figure 2 :: le positionnements de pièces élémentaires et d'un élément d'assemblage au cours d'une troisième étape du procédé ;
- Figure 3 :: les pièces élémentaires et l'élément d'assemblage de la figure 2 dans une position préassemblée à l'issue de la troisième étape du procédé ;
- figure 3a :: un détail d'une section des éléments préassemblés de la figure 3 ;
- figure 4 :: les pièces élémentaires et l'élément d'assemblage de la figure 3 pendant la phase de collage à l'issue de la quatrième étape du procédé et au cours d'une cinquième étape du procédé ;
- figure 4a :: un détail d'une section des éléments au cours de la cinquième étape du procédé ;
- figure 5a :: détail d'une section d'un assemblage en bout ;
- figure 5b :: détail d'une section d'un assemblage en L ;
- figure 5c :: détail d'une section d'un assemblage en Pi ;
- figure 5d :: détail d'une section d'un assemblage en croix ;
- figure 5e :: détail d'une section d'une variante d'un assemblage en Pi.

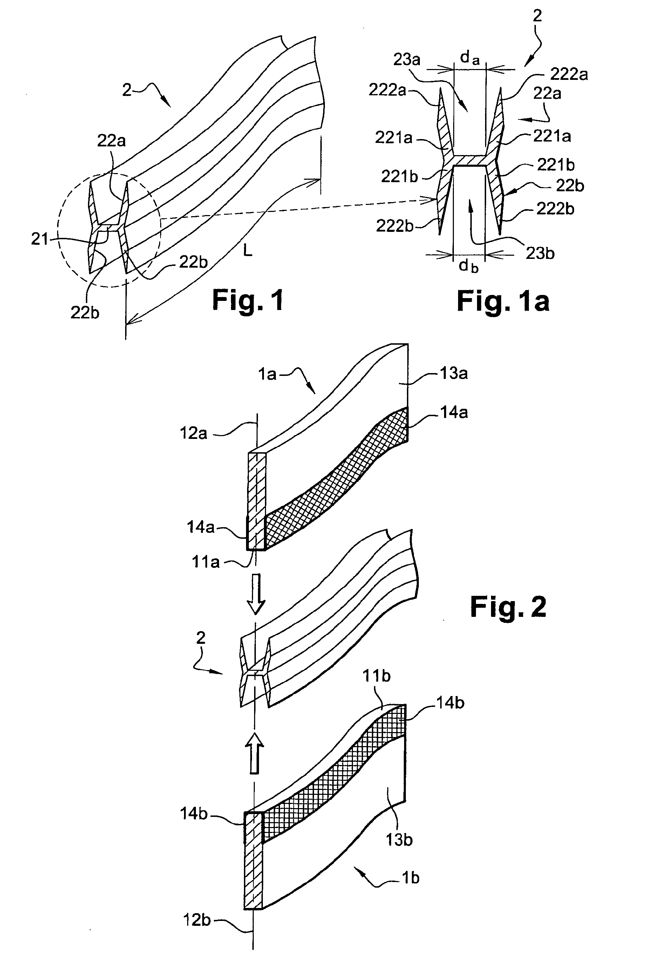

Suivant le procédé de l'invention dont les étapes sont illustrées sur les figures 1 à 4, une structure complexe en matériau composite est réalisée par un assemblage de plusieurs pièces simples et ou de sous-ensembles également essentiellement réalisés en matériau composite.

Par matériau composite au sens de l'invention on entend un matériau appartenant à la famille des matériaux composites généralement utilisés pour la réalisation de structures devant être à la fois légères et résistantes telles que celles utilisées pour la réalisation des aéronefs ou d'autres véhicules performants, comportant des fibres plus ou moins longues de matières minérales ou organiques (verre, carbone, aramide...) maintenues dans une matrice formée par une résine organique dure.

Les pièces simples ou sous-ensembles assemblés pour réaliser la structure sont pour les besoins de l'invention de deux types principaux.

Un premier type de pièces simples correspond à des éléments 1a, 1b de structure qui doivent être maintenus dans des positions précises et reliés entre eux pour constituer la structure complexe. Les pièces de ce premier type sont désignées pièces élémentaires.

Les pièces élémentaires 1a, 1b sont de formes plus ou moins complexes et sont le cas échéant elles-mêmes formées de plusieurs éléments plus simples préalablement assemblés avec un procédé connu quelconque ou avantageusement lorsqu'il est applicable avec le procédé de l'invention.

Pour l'illustration d'un mode de mise en oeuvre du procédé, en particulier sur les figures 1 à 4, les pièces élémentaires 1a, 1b sont des panneaux plans ou à faible courbure. Ces formes de pièces élémentaires ne sont pas limitatives de l'application du procédé.

Un second type de pièces simples correspond à des éléments d'assemblage 2 qui assurent des liaisons entre les pièces élémentaires 1a, 1b.

Les liaisons réalisées suivant le procédé par les éléments d'assemblage sont des liaisons dites structurales, c'est à dire des liaisons qui sont aptes à assurer la transmission entre les pièces élémentaires d'efforts d'intensités équivalentes à celles des efforts pour lesquelles les dites pièces élémentaires sont conçues.

Suivant le procédé, dans une première étape, non illustrée, les pièces élémentaires 1a, 1b sont réalisées avantageusement à base de matériaux composites suivant des méthodes conventionnelles.

Par exemple, en fonction des efforts et des rigidités nécessaires à la structure devant être réalisée, une pièce élémentaire est réalisée suivant une technologie utilisant des fibres, agencées en nappes ou en fibres tissées, préalablement imprégnées d'une résine non durcie, dites préimprégnées, déposées sur une forme ou dans un moule et soumises à une opération de cuisson qui durcie la résine par polymérisation. Les pièces ainsi réalisées ont des formes stables correspondant en général aux formes définitives souhaitées pour les dites pièces, les dites pièces comportant le cas échéant des éléments associés, par exemple des raidisseurs, pouvant être réalisés en même temps que les pièces ou être rapportés et fixés sur les pièces par des moyens connus.

Un autre exemple pour réaliser une pièce élémentaire consiste découper des flans dans un matériau composite thermoformable et à mettre lesdits flans en forme.

Un matériau composite thermoformable est un matériau composite dont la matrice est formée par une résine dure à température normale de mise en oeuvre de la structure mais qui peut être déformée plastiquement en élevant la température au cours d'un processus de formage.

Un autre exemple pour réaliser une pièce élémentaire consiste, suivant le procédé connu dit RTM ou tout autre procédé dérivé comme l'infusion de film, à imprégner des fibres sèches préalablement placées dans un moule par une résine liquide injectée dans ledit moule, résine qui est ensuite durcie par polymérisation.

Dans une seconde étape du procédé, illustrée sur la figure 1, des éléments d'assemblage 2 sont préparés.

Un élément d'assemblage 2, destiné dans une forme simple comme illustré sur la figure 1 et sur la figure 1a à assembler deux pièces élémentaires 1a et 1b comportant un bord 11a, respectivement 11b, sensiblement commun lorsque les dites deux pièces sont assemblées, consiste en un profilé c'est à dire un élément allongé de section courante sensiblement constante ou faiblement évolutive dont une longueur caractéristique L correspond sensiblement à la longueur commune des pièces élémentaires assemblées.

L'élément d'assemblage 2 comporte sur chacun de deux côtés opposés d'une âme longitudinale 21 de liaison une paire d'ailes longitudinales 22a, 22b solidaires de l'âme 21 au niveau pour chacune des dites ailes d'un pied d'aile 221a, respectivement 221b, et formant une gorge 23a, respectivement 23b.

Les éléments d'assemblage sont réalisés, au moyen de moules ou de formes adaptées aux formes des dits éléments d'assemblage, dans un matériau composite thermoducissable, c'est à dire dont la matrice est une résine apte à durcir par polymérisation au cours d'une phase de cuisson par élévation de la température, soit par un procédé utilisant des fibres préimprégnées soit par un procédé RTM de transfert de résine dans des fibres sèches.

Les moules ou formes mis en oeuvres, non représentés, pour réaliser un élément d'assemblage sont tels que :
- une largeur de fond de gorge da, db séparant les pieds d'aile 221a, 221b d'une paire d'aile 22a, 22b, au niveau de l'âme 21 de l'élément d'assemblage 2, est sensiblement égale en tout point de la longueur du dit élément d'assemblage à une épaisseur de la pièce élémentaire 1a, 1b avec laquelle ledit élément d'assemblage doit être assemblé ;
- de préférence les deux ailes 21a, 21b d'une paire d'aile s'écartent sensiblement l'une de l'autre, avantageusement de manière sensiblement symétrique par rapport à un plan moyen 12a, 12b de la pièce élémentaire 1a, 1b avec lequel l'élément d'assemblage doit être assemblé, depuis les pieds d'ailes 221a, 221b vers des extrémités libres 222a, 222b des ailes, opposées aux dits pieds par rapport à l'âme 21, formant une section de géométrie évasée en direction d'une ouverture de la gorge 23a, 23b ;
- les ailes 22a, 22b de chaque paire d'ailes sont orientées dans l'espace pour correspondre à des orientations relatives voulues des pièces élémentaires 1a, 1b destinées à être assemblées par l'élément d'assemblage.

Dans un mode particulier de réalisation, lorsque l'élément d'assemblage 2 doit suivre, en conformité avec les pièces élémentaires 1a, 1b à assembler, des courbures avec des rayons relativement petits qui ne pourraient par être obtenus sans défaut significatif par une opération ultérieure de cintrage du dit élément d'assemblage, les moules ou formes utilisés pour réaliser l'élément d'assemblage reproduisent autant que de besoin les courbures dans l'espace que ledit élément d'assemblage aura dans une position définitive dans la structure à réaliser.

Dans une première phase de la seconde étape du procédé, des fibres préimprégnées de résine sont déposées, ou bien des fibres sèches sont déposées et la résine fluide injectée dans les fibres suivant le procédé utilisé, en utilisant les moules ou formes correspondant à l'élément d'assemblage 2 à réaliser.

Dans une seconde phase de la seconde étape du procédé, la résine des fibres est soumise à une première phase de cuisson thermique, dite cuisson thermique partielle, qui à pour effet de polymériser partiellement la résine de telle sorte:
- qu'elle donne à la température ambiante d'un atelier, autour de 20°C, une rigidité propre à l'élément réalisé lui permettant de conserver sensiblement sa forme lorsqu'il n'est pas soumis à des contraintes mécaniques significatives et de pouvoir être stocké sur de longues périodes, à l'échelle de temps des procédés industriels de fabrication considérés, sans évolution chimique significative de la résine ;
- qu'une élévation de température temporaire ultérieure conduit à un abaissement de la rigidité du matériau composite constituant l'élément lui conférant des caractéristiques physiques et rhéologiques similaires à celles d'un matériau composite thermoplastique.

Ladite phase de cuisson thermique partielle est par exemple une cuisson thermique de durcissement du matériau thermodurcissable normalement utilisée pour polymériser et durcir le matériau composite et qui est interrompue avant la gélification complète de la résine, c'est à dire le point dans le processus de polymérisation où la densité du réseau tridimensionnel des chaînes moléculaires au sein de la résine a atteint un stade pour lequel ladite résine n'a plus les caractéristiques suffisantes pour une mise en oeuvre conventionnelle des fibres préimprégnées. Le moment auquel il est souhaitable d'interrompre la cuisson thermique est fonction du type de résine utilisée. Il est déterminé, par exemple expérimentalement, auprès du point de la gélification de ladite résine.

Le procédé utilise donc une propriété dite de thermoplasticité que les matériaux thermodurcissables, normalement insensibles à la chaleur après polymérisation (dans les limites de la stabilité chimique de la résine polymérisée), ont temporairement au cours du processus normal de durcissement par polymérisation.

La cuisson thermique partielle consiste à élever la température de la résine par un procédé conventionnel pour provoquer le durcissement de la résine, mais le processus de polymérisation est dans ce cas interrompu avant le durcissement complet de la résine par un retour à la température ambiante.

En particulier à ce stade du procédé, l'élément d'assemblage 2 conserve à température ambiante sensiblement les courbures qui lui ont été conférées par le moule ou la forme dans lequel il a été réalisé et les ailes 22a, 22b sont suffisamment stables pour ne pas s'effondrer sous leurs propres poids et lors des manipulations ultérieures.

Des procédés conventionnels de réalisation de pièces en matériau composite sont avantageusement mis en oeuvre pour réaliser un élément d'assemblage 2, par exemple des fibres préimprégnées sont déposées sur des moules ayant la forme extérieure voulue pour ledit élément d'assemblage. Cette opération est par exemple réalisée en drapant manuellement ou au moyen d'une machine à draper des nappes de fibres préimprégnées.

Puis l'élément d'assemblage 2 est soumis à la cuisson thermique partielle, en général avec application d'une pression sur le matériau composite déposé sur les moules.

Dans une troisième phase de la seconde étape du procédé, l'élément d'assemblage est sorti du moule dans lequel il a été soumis à la cuisson thermique partielle de polymérisation.

Après retour de l'élément à la température ambiante, la polymérisation de la résine est très ralentie et l'élément d'assemblage 2 peut être stocké au minimum six mois, suivant les essais réalisés, dans des conditions ambiantes lorsque la température est maintenue en dessous de 40° centigrade avec une hygrométrie relative inférieure à 60% sans que ses propriétés dites thermoplastiques n'évoluent sensiblement.

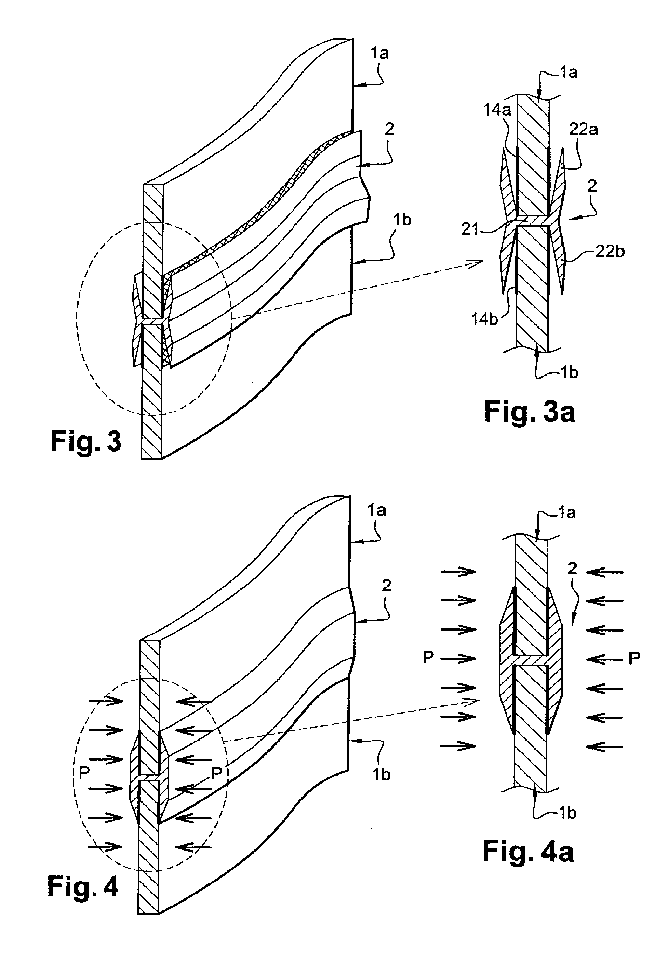

Dans une troisième étape du procédé correspondant à la figure 2 et à la figure 3, les pièces élémentaires 1a, 1b, au moins deux pièces, sont placées et maintenues, par des moyens outillage non représentés, les unes par rapport aux autres dans des positions relatives correspondant aux positions relatives que les dites pièces élémentaires doivent avoir dans l'assemblage, position dite position préassemblée.

Lors de cette étape de placement des pièces élémentaires 1a, 1b, le ou les éléments d'assemblage 2 réalisés au cours de la seconde étape du procédé sont également mis en place de telle sorte que les bords 11a, 11b des pièces élémentaires 1a, 1b devant être assemblés sont insérés dans les gorges 23a, 23b formées par les paires d'ailes 22a, 22b des dits éléments d'assemblage, les dits bords des pièces élémentaires insérés dans les dites gorges venant sensiblement en appui sur les âmes 21 des éléments d'assemblage 2.

Du fait de la cuisson thermique partielle appliquée précédemment aux éléments d'assemblage 2, d'une part les dits éléments d'assemblage présentent une rigidité à température ambiante et une stabilité qui permet de les manipuler sans moyens particuliers, tels que des moules ou des noyaux porteurs de fibres préimprégnées non durcies nécessaires dans les procédés connus, et d'autre part les dits éléments d'assemblage sont suffisamment peu rigides pour être aisément conformés à la forme voulue lors de leurs positionnements et maintenus aux emplacements voulus pendant les diverses opérations de préassemblage, contrairement aux procédés qui assemblent des éléments totalement polymérisés trop rigides pour être sensiblement déformés.

A l'issue de cette étape du procédé un ensemble de pièces élémentaires 1a, 1b, au moins deux, et d'éléments d'assemblage, au moins un, se trouvent placés dans des positions conformes aux positions que les dits éléments et profilés doivent avoir dans l'assemblage à réaliser.

Toutefois, comme illustré sur le détail de la figure 3a, à cette même étape du procédé, les ailes 22a, 22b des éléments d'assemblage 2, relativement rigide à la température de mise en oeuvre, a priori la température ambiante d'un atelier de fabrication de pièces en matériaux composites, ne sont pas en contact avec des faces 13a, 13b des pièces élémentaires 1a, 1b en raison de la géométrie évasée des gorges 23a, 23b formées par les paires d'ailes, ce qui a d'une part pour effet de rendre l'insertion des bords 11a, 11b des pièces élémentaires 1a, 1b dans les gorges des éléments d'assemblage 2 particulièrement aisé jusqu'à l'âme 21 des dits éléments d'assemblage et d'autre part pour conséquence que la liaison structurale entre une pièce élémentaire 1a, 1b et un élément d'assemblage 2 dans lequel elle est insérée ne présente pas de surface de contact significative.

Dans une quatrième étape du procédé, la température des pièces élémentaires et des éléments d'assemblage en position préassemblée, au moins localement dans les zones concernées par les profilés d'assemblage, est élevée jusqu'à une valeur pour laquelle le matériau composite des éléments d'assemblage devient plastique et peut être déformé, et une pression P est appliquée sur les ailes 22a, 22b des éléments d'assemblage de telle sorte que les dites ailes se trouvent rapprochées des faces 13a, 13b des pièces élémentaires 1a, 1b, comme illustré sur le détail de la figure 4a.

Dans une cinquième étape correspondant à la figure 4 une seconde cuisson thermique complète de polymérisation est réalisée de telle sorte que le matériau des éléments d'assemblage, ayant subit au cours de la seconde étape du procédé une cuisson thermique partielle, durcisse par polymérisation complète de la résine.

Lors de cette cuisson thermique complète, la pression exercée sur les ailes 22a, 22b est avantageusement maintenue de sorte que les ailes adhèrent intiment aux faces 13a, 13b des pièces élémentaires 1a, 1b avec lesquelles elles sont en contact.

Par polymérisation complète, il faut comprendre le niveau de polymérisation des résines utilisées qui est atteint dans les procédés conventionnels lorsqu'il est considéré que le matériau composite a acquis des caractéristiques mécaniques stables admises comme définitives en regard de l'usage prévu des pièces.

Cette adhérence par polymérisation sous pression est avantageusement améliorée par l'adjonction de films de colle 14a, 14b placés, avant la troisième étape du procédé, sur les faces 13a, 13b des pièces élémentaires 1a, 1b au niveau de surfaces devant être en contact avec les ailes 22a, 22b.

Les pressions P exercées sur les ailes 22a, 22b lors de ces quatrième et cinquième étapes du procédé peuvent être réalisées par tout moyen apte à exercer une pression répartie et régulière.

Avantageusement la pression est réalisée au moyen de vessies souples, non représentées, fixées sur les zones où doivent être appliquées des pressions et dans lesquelles vessies est réalisé un vide partiel de sorte que la pression atmosphérique exerce la pression recherchée.

Dans d'autres modes de mise en oeuvre de cette étape du procédé, la pression est exercée contre des surfaces d'appui de moules au moyen d'une contre forme ou d'un dispositif de mise en pression contre le moule, avantageusement un dispositif de mise en pression comportant des moyens hydrostatiques en raison de la répartition de pression homogène produite par de tels moyens.

Dans une forme préférée de réalisation des éléments d'assemblage 2, les ailes 22a, 22b ont des épaisseurs variables entre leurs pieds 221a, 221b et leurs extrémités libres 222a, 222b.

Ainsi une aile 22a, 22b présente une première épaisseur au pied, dite épaisseur d'emplanture, et une seconde épaisseur à l'extrémité libre, dite épaisseur d'extrémité, inférieure à l'épaisseur d'emplanture.

Les diminutions de l'épaisseur d'une aile 22a, 22b entre l'épaisseur d'emplanture et l'épaisseur d'extrémité sont réalisées lors de la réalisation du profilé d'assemblage par des réductions d'un nombre de plis de fibres du matériau composite formant l'aile depuis son pied 221a, 221b vers son extrémité libre 222a, 222b.

Cette réduction du nombre de plis formant l'aile est avantageusement adaptée aux flux d'efforts transmis entre les ailes et la pièce élémentaire à laquelle lesdites ailes sont fixées, la pièce élémentaire étant progressivement déchargée et des efforts croissants étant transmis dans les ailes depuis les extrémités libres vers les pieds.

Avantageusement les extrémités libres 222a, 222b des ailes 22a, 22b sont terminées par des chanfreins qui assurent à la fois la propreté du raccord entre les faces 13a, 13b de la pièce élémentaire et les ailes et qui protègent les extrémités libres 222a, 222b des ailes.

Comme il a déjà été précisé, l'exemple détaillé décrit n'illustre qu'une forme particulière d'éléments d'assemblage et d'application associée du procédé.

De nombreuses autres formes de profilés d'assemblage sont possibles dans le cadre de l'application du procédé de l'invention.

Un profilé d'assemblage 2 est en pratique réalisé au cours de la seconde étape du procédé en fonction des formes et du nombre de pièces élémentaires devant être maintenues par l'élément d'assemblage.

Outre les dimensions de l'élément d'assemblage, des ailes en particulier, qui sont adaptées aux dimensions des différentes pièces élémentaires, un élément d'assemblage comporte autant de paires d'ailes que de pièces élémentaires maintenues par le dit élément d'assemblage, un même élément d'assemblage comportant le cas échéant un nombre variable de paires d'ailes suivant une position sur la longueur du dit élément d'assemblage.

Chaque paire d'aile 22a, 22b détermine une orientation moyenne 12a, 12b, correspondant à un plan moyen local de la pièce élémentaire 1a, 1b devant être maintenue par ladite paire d'ailes, et forme avec l'orientation moyenne d'une autre paire d'aile un angle quelconque défini en tout point par des angles de raccordement voulus pour les pièces élémentaires.

Conformément aux raccordements voulus des pièces élémentaires, un élément d'assemblage est rectiligne ou courbe, à simple courbure ou à double courbure, et ou vrillé, c'est à dire que la direction de l'orientation moyenne d'une paire d'aile est variable en fonction de la position suivant sa position sur la longueur de l'élément d'assemblage.

Cependant lorsque les courbures et ou vrillages sont faibles vis à vis de la rigidité de l'élément d'assemblage 2 obtenu après la cuisson thermique partielle de la seconde étape de l'élément d'assemblage, les dites courbures et vrillages faibles sont avantageusement négligés lors de la seconde étape du procédé pour simplifier la réalisation de l'élément d'assemblage 2 et ledit élément d'assemblage est déformé de manière plus ou moins élastique lors du préassemblage de la troisième étape du procédé.

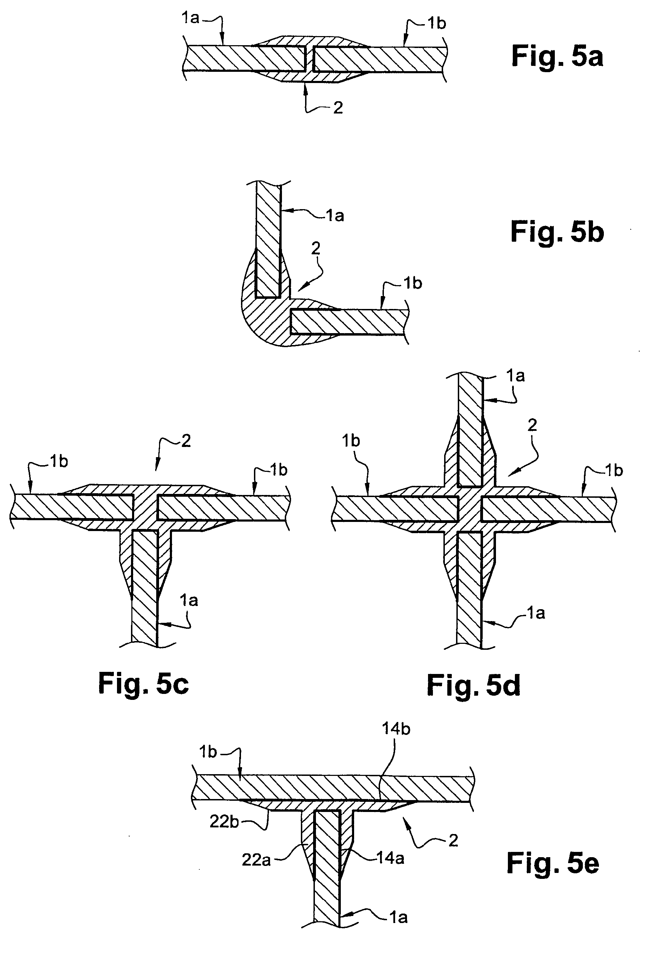

De manière non limitative, les figures 5a à 5e illustrent des exemples de sections d'éléments d'assemblage simples.

Dans l'assemblage, présenté sur la figure 5a, dit en bout, de deux pièces élémentaires, le profilé d'assemblage présente une forme en H dans laquelle les paires d'ailes sont orientées dans des directions moyennes sensiblement opposées.

Cet assemblage en bout correspond à celui utilisé pour la description détaillée d'un mode de mise en oeuvre du procédé de l'invention.

Pour l'assemblage, présenté sur la figure 5b, dit en angle, de deux pièces élémentaires, l'élément d'assemblage présente une forme en L dans laquelle les paires d'ailes sont orientées dans des directions moyennes formant un angle A voulu.

Pour l'assemblage, présenté sur la figure 5c, dit en bout de trois pièces élémentaires le profilé d'assemblage présente une forme en Pi dans laquelle les paires d'ailes sont orientées dans des directions moyennes sensiblement opposées pour deux d'entre elles et dans une direction formant un angle B voulu pour la troisième.

Pour l'assemblage, présenté sur la figure 5d, dit en croix, de quatre pièces élémentaires, le profilé d'assemblage présente une forme en X dans laquelle les paires d'ailes prises deux à deux sont orientées dans des directions moyennes sensiblement opposées et un groupe de deux paires d'ailes formant un angle avec l'autre groupe de deux paires d'ailes.

Dans une forme voisine de la forme en Pi de réalisation, illustrée sur la figure 5e, une première pièce élémentaire est assemblée par un bord de ladite première pièce sur une face d'une seconde pièce élémentaire. Dans cet assemblage, les ailes du profilé d'assemblage situées du côté de la face de la seconde pièce élémentaire sont réalisées ouvertes de telle sorte que les surfaces de contact des dites ailes devant adhérer à la dite face de la seconde pièce viennent en appui sur ladite face lors de la cinquième étape du procédé.

Diverses combinaisons des différents exemples d'assemblages illustrés ou d'autres assemblages réalisés suivant des principes similaires sont également possibles dans le cadre de l'invention.

Le procédé suivant l'invention s'applique avantageusement, mais non exclusivement, à l'assemblage de pièces élémentaires ayant des formes de panneaux par exemple pour la réalisation de structures en caissons telles que des caissons de voilure d'avion.

## Revendications

1. Procédé de réalisation d'une structure complexe en matériau composite comportant au moins deux pièces élémentaires (1a, 1b) structurales assemblées par au moins un bord (11a, 11b) d'une des dites deux pièces élémentaires, lequel procédé comporte les étapes de :
- a) réalisation des pièces élémentaires (1a, 1b) ;
- b) réalisation d'au moins un élément d'assemblage (2) apte à assurer une liaison structurale entre les pièces élémentaires (1a, 1b), ledit au moins un élément d'assemblage :
- b1) étant réalisé en matériau composite comportant des fibres imprégnées d'une résine apte à durcir par polymérisation au cours d'une cuisson thermique ;
- b2) comportant des ailes (22a, 22b) solidaires d'une âme (21), au moins une paire d'ailes déterminant au moins une gorge (23a, 23b), destinée à recevoir le bord (11a, 11b) d'une pièce élémentaire, dont une largeur de fond de gorge (da, db) au niveau de l'âme correspond sensiblement en tout point à une épaisseur de la pièce élémentaire (1a, 1b) le long du bord (11a, 11b) devant être inséré dans ladite gorge ;
- b3) étant soumis à une cuisson thermique partielle ayant pour effet de polymériser partiellement la résine de l'élément d'assemblage (2) d'une part jusqu'à un stade où ledit élément a acquis une stabilité dimensionnelle suffisante pour assurer sa manipulation et garantir son intégrité lors des opérations ultérieures d'assemblage, et d'autre part limitée à un stade ou la résine a des propriétés thermoplastiques permettant un formage plastique dudit élément d'assemblage en élevant sa température ;
- c) positionnement relatif des au moins deux pièces élémentaires (1a, 1b) et du au moins un élément d'assemblage (2) conformément à leurs positions relatives respectives dans la structure à réaliser ;
- d) élévation de la température, au moins localement, jusqu'à une température de formage thermoplastique des ailes (22a, 22b) et application d'une pression P sur les dites ailes pour appliquer les dites ailes sur des faces (13a, 13b) des pièces élémentaires (1a, 1b) ;
- e) réalisation d'une cuisson thermique complète de polymérisation de la résine du au moins un élément d'assemblage (2).

2. Procédé suivant la revendication 1 dans lequel les ailes (22a) (22b) d'une paire d'ailes formant la au moins une gorge (23a) (23b) du au moins un élément d'assemblage (2) s'écartent l'une de l'autre depuis des pieds (221a) (221b) à proximité de l'âme (21) vers des extrémités libres (222a) (222b) des dites ailes de telle sorte que ladite gorge est évasée vers les dites extrémités libres.

3. Procédé suivant la revendication 1 ou la revendication 2 dans lequel un film de colle (14a, 14b) est déposé sur des surfaces des faces (13a, 13b) sur lesquelles les ailes (22a, 22b) viennent en appui.

4. Procédé suivant l'une des revendications précédentes dans lequel l'élément d'assemblage (2) est réalisé lors de l'étape b) sans que ne soient reproduits sur ledit élément d'assemblage l'ensemble des courbures et ou des vrillages que ledit élément d'assemblage aura dans la position préassemblée ou assemblée avec les pièces élémentaires (1a, 1b).

5. Procédé suivant l'une des revendications précédentes dans lequel au moins un élément d'assemblage (2) est réalisé avec deux paires d'ailes opposées pour assurer l'assemblage de deux pièces élémentaires (1a, 1b) sensiblement alignées.

6. Procédé suivant l'une des revendications précédentes dans lequel au moins un élément d'assemblage (2) est réalisé avec des paires d'ailes d'orientations moyennes différentes pour assurer l'assemblage de deux pièces élémentaires (1a, 1b) formant un angle à leurs bords communs (11a, 11b).

7. Procédé suivant l'une des revendications précédentes dans lequel au moins un élément d'assemblage (2) est réalisé avec au moins trois paires d'ailes d'orientations moyennes différentes pour assurer l'assemblage d'au moins trois pièces élémentaires (1a, 1b).

8. Procédé suivant l'une des revendications précédentes dans lequel au moins un élément d'assemblage (2) est réalisé pour assurer l'assemblage de deux pièces élémentaires (1a, 1b) une pièce élémentaire étant assemblée par un bord de la dite pièce sur une face de l'autre pièce élémentaire, les ailes de la paire d'ailes fixées sur ladite autre pièce élémentaire formant une surface d'appui conformée pour être appliquée sur la face de ladite autre pièce.

## Claims

1. A method of producing a complex composite materialstructure, comprising at least two elementary structural pieces (1a, 1b) assembled by at least one edge (11a, 11b) of one of said two elementary pieces, said method comprising the steps of:
- a) producing the elementary pieces (1a, 1b);
- b) producing at least one assembly element (2) able to provide a structural connection between the elementary pieces (1a, 1b), said at least one assembly element:
- b1) being produced from composite material comprising fibres impregnated with a resin able to harden by polymerisation during heat curing;
- b2) comprising flanges (22a, 22b) secured to a web (21), at least one pair of flanges determining at least one groove (23a, 23b), intended to receive the edge (11a, 11b) of an elementary piece, wherein a groove bottom width (da, db) at the web corresponds substantially at every point to a thickness of the elementary piece (1a, 1b) along the edge (11a, 11b) that is to be inserted in said groove;
- b3) being subjected to partial heat curing, the effect of which is to partially polymerise the resin of the assembly element (2) firstly to a stage where said element has acquired sufficient dimensional stability to provide manipulation thereof and guarantee integrity thereof during subsequent assembly operations, and secondly limited to a stage where the resin has thermoplastic properties enabling plastic forming of said assembly element by raising the temperature thereof;
- c) relative positioning of the at least two elementary pieces (1a, 1b) and of the at least one assembly element (2) in accordance with the respective relative positions thereof in the structure to be produced;
- d) raising of the temperature, at least locally, to a thermoplastic forming temperature for the flanges (22a, 22b) and application of a pressure P to said flanges in order to apply said flanges to faces (13a, 13b) of the elementary pieces (1a, 1b);
- e) implementing complete polymerisation heat curing of the resin of at least one assembly element (2).

2. A method according to claim 1, wherein the flanges (22a) (22b) of a pair of flanges forming the at least one groove (23a) (23b) of the at least one assembly element (2) separate from each other from feet (221a) (221b) close to the web (21) towards free ends (222a) (222b) of said flanges so that said groove is splayed towards said free ends.

3. A method according to claim 1 or claim 2, wherein a film of adhesive (14a, 14b) is deposited on surfaces of the faces (13a, 13b) on which the flanges (22a, 22b) come into abutment.

4. A method according to one of the preceding claims, wherein the assembly element (2) is produced during step b) without there being reproduced on said assembly element all the curvatures or twists that said assembly element will have in the position in which it is preassembled or assembled with the elementary pieces (1a, 1b).

5. A method according to one of the preceding claims, wherein at least one assembly element (2) is produced with two pairs of opposite flanges in order to assemble two substantially aligned elementary pieces (1a, 1b).

6. A method according to one of the preceding claims, wherein at least one assembly element (2) is produced with pairs of flanges with different mean orientations in order to assemble two elementary pieces (1a, 1b) forming an angle at their common edges (11a, 11b).

7. A method according to one of the preceding claims, wherein at least one assembly element (2) is produced with at least three pairs of flanges with different mean orientations in order to assemble at least three elementary pieces (1a, 1b).

8. A method according to one of the preceding claims, wherein at least one assembly element (2) is produced in order to assemble two elementary pieces (1a, 1b), one elementary piece being assembled by an edge of said piece on a face of the other elementary piece, the flanges of the pair of flanges fixed to said other elementary piece forming a support surface conformed so as to be applied to the face of said other piece.

## Patentansprüche

1. Verfahren zur Herstellung einer komplexen Struktur aus Verbundmaterial, die wenigstens zwei strukturelle elementare Teile (1a, 1b) enthält, die durch wenigstens einen Rand (11 a, 11b) eines der zwei elementaren Teile zusammengefügt sind, wobei das Verfahren die folgenden Schritte umfasst:
- a) Herstellen der elementaren Teile (1a, 1 b);
- b) Werstellen wenigstens eines Montageelements (2), das eine strukturelle Verbindung zwischen den elementaren Teilen (1a, 1b) gewährleisten kann, wobei das wenigstens eine Montageelement:
- b1) aus Verbundmaterial hergestellt ist, das imprägnierte Fasern eines Harzes enthält, das durch Polymerisation während eines thermischen Brennens härten kann;
- b2) Flügel (22a, 22b) enthält, die mit einem Kern (21) fest verbunden sind, wobei wenigstens ein paar Flügel wenigstens eine Kehle (23a, 23b) festlegt, die dazu vorgesehen ist, den Rand (11a, 11b) eines elementaren Teils aufzunehmen, wobei die Breite des Bodens der Kehle (da, db) auf Höhe des Kerns im Wesentlichen an jedem Punkt einer Dicke des elementaren Teils (1a, 1b) längs des Randes (11a, 11b), der in die Kehle eingesetzt werden soll, entspricht;
- b3) einem teilweisen thermischen Brennen unterworfen wird, was eine teilweise Polymerisation des Harzes des Montageelements (2) einerseits bis zu einem Stadium, in dem das Element eine ausreichende Abmessungsstabilität angenommen hat, um seine Handhabung sicherzustallen und um seine Integrität bei späteren Montageoperationen zu garantieren, und andererseits beschränkt auf ein Stadium, in dem das Harz thermoplastische Eigenschaften hat, die eine plastische Formung des Montageelements beim Erhöhen seiner Temperatur ermöglichen, bewirkt;
- c) relatives Positionieren der wenigstens zwei elementaren Teile (1a, 1 b) und des wenigstens einen Montageelements (2) in Übereinstimmung mit ihren jeweiligen relativen Positionen in der herzustellenden Struktur;
- d) Erhöhen der Temperatur wenigstens räumlich begrenzt, bis eine thermoplastische Formungstemperatur der Flügel (22a, 22b) erreicht ist, und Ausüben eines Drucks P auf die Flügel, um die Flügel auf Flächen (13a, 13b) der elementaren Teile (1a, 1b) zu drücken;
- e) Ausführen eines vollständigen thermischen Brennens für die Polymerisation des Harzes des wenigstens einen Montageelements (2).

2. Verfahren nach Anspruch 1, wobei sich die Flügel (22a) (22b) eines Flügelpaars, die die wenigstens eine Kehle (23a) (23b) des wenigstens einen Montageelements (2) bilden, von den Fußenden (221a) (221b) in der Nähe des Kerns (21) zu den freien Enden (222a) (222b) der Flügel voneinander entfernen, derart, dass sich die Kehle zu den freien Enden erweitert.

3. Verfahren nach Anspruch 1 oder Anspruch 2, wobei auf die Oberflächen der Flächen (13a, 13b), auf die die Flügel (22a, 22b) gedrückt werden, eine dünne Klebeschicht (14a, 14b) aufgebracht wird.

4. Verfahren nach einem der vorhergehenden Ansprüche, wobei das Montageelement (2) in Schritt b) hergestellt wird, ohne dass auf dem Montageelement die Gesamtheit der Krümmungen und/oder der Verwindungen reproduziert wird, die das Montageelement in seiner vormontierten oder montierten Position mit den elementaren Teilen (1a, 1b) hat.

5. Verfahren nach einem der vorhergehenden Ansprüche, wobei wenigstens ein Montageelement (2) mit zwei Paaren gegenüberliegender Flügel hergestellt ist, um die Montage von zwei im Wesentlichen aufeinander ausgerichteten elementaren Teilen (1a, 1b) sicherzustellen.

6. Verfahren nach einem der vorhergehenden Ansprüche, wobei wenigstens ein Montageelement (2) mit Flügelpaaren mit unterschiedlichen mittleren Orientierungen hergestellt wird, um die Montage von zwei elementaren Teilen (1a, 1b), die an ihren gemeinsamen Rändern (11a, 11b) einen Winkel bilden, sicherzustellen.

7. Verfahren nach einem der vorhergehenden Ansprüche, wobei wenigstens ein Montageelement (2) mit wenigstens drei Flügelpaaren mit unterschiedlichen mittleren Orientierungen hergestellt wird, um die Montage von wenigstens drei elementaren Teilen (1a, 1 b) sicherzustellen.

8. Verfahren nach einem der vorhergehenden Ansprüche, wobei wenigstens ein Montageelement (2) hergestellt wird, um die Montaga von zwei elementaren Teilen (1a, 1b) sicherzustellen, wobei ein elementares Teil durch einen Rand dieses Teils auf einer Fläche des anderen elementaren Teils zusammengefügt wird, wobei die Flügel des Flügelpaars, die an dem anderen elementaren Teil befestigt sind, eine Abstützoberfläche bilden, die geeignet ist, auf die Fläche des anderen Teils gedrückt zu werden.
